# EUROPEAN PATENT APPLICATION

(11) **EP 2 617 768 A1**
(43) Date of publication of application: **24.07.2013**
(21) Application number: 10857118.3
(22) Date of filing: 30.12.2010
(51) Int. Cl.: C08L 27/18, C08L 67/00

(54) **ANTI-WEAR MATERIAL OF MODIFIED POLYTETRAFLUOROETHYLENE**

(30) Priority: 17.09.2010 CN 201010286922
(71) Applicant: Zhonghao Chenguang Research Institute of Chemical Industry Co., Ltd., Zigong, Sichuan 643201 (CN)
(72) Inventor: XIAO, Ping, Zigong Sichuan 643201 (CN); ZHANG, Jianxin, Zigong Sichuan 643201 (CN); ZHOU, Yunfeng, Zigong Sichuan 643201 (CN)
(74) Representative: Simon, Josef
(86) International application number: PCT/CN2010/002210
(87) International publication number: WO 2012/034262

(57) **Abstract**

An anti-wear material of modified polytetrafluoroethylene resin is provided, which is prepared by mixing sufficiently a polyphenyl p-hydroxybenzoate polymer used as modifier with polytetrafluoroethylene resin in a certain weight ratio, and then carrying out cold-press sintering or hot-press sintering. The anti-wear material made from the modified polytetrafluoroethylene resin has very low average wear coefficient.

## Description

### Technical Field

The invention relates to an anti-wear material, in particular, an anti-wear material of modified polytetrafluoroethylene resin.

### Background Art

Currently, the anti-wear materials used in China mainly include phenolic resin, fiber glass, molybdenum disulfide and carbon fiber etc. However, the major deficiency of these materials is the severe grinding abrasion.

Additionally, polytetrafluoroethylene is often modified in conventional methods by adding inorganic fillers such as fiber glass, graphite and molybdenum disulfide into it; however, due to high abrasion and short life span, these materials are apt to bring abrasion to the grinding mating-parts.

### Summary of the Invention

The object of the invention is to provide an anti-wear material of modified polytetrafluoroethylene resin, mainly solving the technical problems in the prior art, for example, the existing anti-wear materials have relatively high abrasion, in particular, they bring great damage to grinding mating-parts.

In order to achieve the object of the invention, the anti-wear material of modified polytetrafluoroethylene resin according to the invention is provided, which is prepared by adding a polyphenyl p-hydroxybenzoate polymer to polytetrafluoroethylene resin, mixing uniformly and then carrying out cold-press sintering or hot-press sintering.

In the above mentioned anti-wear material, the content of the polyphenyl p-hydroxybenzoate polymer is 15-50% by weight, and the content of the polytetrafluoroethylene resin is 50-85% by weight; preferably, the content of the polyphenyl p-hydroxybenzoate polymer is 20-45% by weight, and the content of the polytetrafluoroethylene resin is 55-80% by weight; more preferably the content of the polyphenyl p-hydroxybenzoate polymer is 25% by weight, and the content of the polytetrafluoroethylene resin is 75% by weight.

In the cold-press sintering process, a mixture of polyphenyl p-hydroxybenzoate polymer and polytetrafluoroethylene resin is firstly uniformly added to a special metal mould, and pressed with a pressure of 20-100Mpa/cm² at room temperature to form a tight pre-moulded product in certain geometrical shape, then the pre-moulded product is heated to a temperature of 360~380°C and kept at such temperature for a certain period of time, and then cooled to give a product with desired size.

In the hot-press sintering process, a sintering pre-moulded product is rapidly put into a mould preheated to a temperature of 360~380°C, then pressed and cooled with water or air; alternatively, the pre-moulded product together with the mould can be put into a sintering furnace and sintered at an increased temperature, pressed and cooled immediately after being taken out of the furnace.

Polyphenyl p-hydroxybenzoate polymer is used as modifier in the invention, since polyphenyl p-hydroxybenzoate possesses high self-lubricity, the typical problem of high abrasion, especially the big damage to grinding mating-parts caused by the ordinary filled tetrafluoroethylene can be solved. The material according to the invention can be used to produce parts which will be used in very strict conditions such as high temperature, high pressure, oil free lubrication and corrosion.

The anti-wear material of modified polytetrafluoroethylene resin according to the invention has very low average wear coefficient, and the most prominent feature of the material is its resistance to grinding abrasion, which causes no damage to grinding mating-parts. Such material has broad application prospect and can be used in a wide range of industrial fields including machinery, aviation, aerospace, electronics and electrics.

### Embodiments

The present invention is further illustrated by the following examples, which are not intended to limit the scope of the invention.

In each of the following examples, the polyphenyl p-hydroxybenzoate with product designation of CGZ351 and the polytetrafluoroethylene resin with product designation of CGM021 are purchased from Zhong Hao Chenguang Research Institute of Chemical Industry.

### Example 1

Polyphenyl p-hydroxybenzoate and polytetrafluoroethylene resin are mixed sufficiently in a weight ratio of 1:3, and then made into resin by cold-press sintering. The average wear coefficient of the resulting resin is 1.6×10⁻⁵ g/h.

The pre-moulded product is heated to a temperature of 370°C, kept at such temperature for a certain period of time, cooled to yield a product with desired size.

### Example 2

Polyphenyl p-hydroxybenzoate and polytetrafluoroethylene resin are mixed sufficiently in a weight ratio of 11:39, and then made into resin by hot-press sintering. The average wear coefficient of the resulting resin is 2.1×10⁻⁵g/h.

The pre-moulded product together with the mould are put into a sintering furnace, sintered to an increased temperature up to 365°C, kept at such temperature for a certain period of time, then pressed and cooled immediately after being taken out of the furnace to yield a product with desired size.

### Example 3

Polyphenyl p-hydroxybenzoate and polytetrafluoroethylene resin are mixed sufficiently in a weight ratio of 3:17, and then made into resin by cold-press sintering. The average wear coefficient of the resulting resin is 3.0×10⁻⁵g/h.

The pre-moulded product is heated to a temperature of 375°C, kept at such temperature for a certain period of time, and then cooled to yield a product with desired size.

### Example 4

Polyphenyl p-hydroxybenzoate and polytetrafluoroethylene resin are mixed sufficiently in a weight ratio of 1:1, and then made into resin by hot-press sintering. The average wear coefficient of the resulting resin is 1.5×10⁻⁵g/h.

The pre-moulded product is heated to a temperature of 360°C, kept at such temperature for a certain period of time, and then cooled to yield a product with desired size.

### Industrial Applicability

The anti-wear material made from the modified polytetrafluoroethylene resin according to the invention has very low average wear coefficient. The most prominent feature of the material is resistance to grinding abrasion, which causes no damage to grinding mating-parts. Such material has broad application prospect and can be used in a wide range of industrial fields including machinery, aviation, aerospace, electronics and electrics.

## Claims

1. An anti-wear material of modified polytetrafluoroethylene resin, **characterized in that** it is prepared by mixing sufficiently a polyphenyl p-hydroxybenzoate polymer with polytetrafluoroethylene resin, and then carrying out cold-press sintering or hot-press sintering.

2. The anti-wear material according to claim 1 or 2, wherein the content of the polyphenyl p-hydroxybenzoate polymer is 15-50% by weight, and the content of the polytetrafluoroethylene resin is 50-85% by weight.

3. The anti-wear material according to claim 2, wherein the content of the polyphenyl p-hydroxybenzoate polymer is 20-45% by weight, and the content of the polytetrafluoroethylene resin is 55-80% by weight.

4. The anti-wear material according to claim 3, wherein the content of the polyphenyl p-hydroxybenzoate polymer is 25% by weight, and the content of the polytetrafluoroethylene resin is 75% by weight.
